(19) Europäisches Patentamt
European Patent Office
Office européen des brevets

(11) Veröffentlichungsnummer: **0 353 190 B1**

(12) # EUROPÄISCHE PATENTSCHRIFT

(45) Veröffentlichungstag der Patentschrift: **01.03.95**

(51) Int. Cl.[6]: **C08L 9/00**, C08L 63/00, C08L 101/00

(21) Anmeldenummer: **89810547.3**

(22) Anmeldetag: **19.07.89**

(54) **Flexibilisatorkombinationen für Epoxidharze.**

(30) Priorität: **28.07.88 CH 2869/88**

(43) Veröffentlichungstag der Anmeldung: **31.01.90 Patentblatt 90/05**

(45) Bekanntmachung des Hinweises auf die Patenterteilung: **01.03.95 Patentblatt 95/09**

(84) Benannte Vertragsstaaten: **CH DE ES FR GB IT LI NL SE**

(56) Entgegenhaltungen:
**EP-A- 0 140 377**
**EP-A- 0 251 792**
**EP-A- 0 252 725**
**EP-A- 0 259 100**
**EP-A- 0 275 186**
**EP-A- 0 308 664**
**AU-A- 28 493**

(73) Patentinhaber: **CIBA-GEIGY AG**
**Klybeckstrasse 141**
**CH-4002 Basel (CH)**

(72) Erfinder: **Mülhaupt, Rolf, Prof. Dr.**
**Chemin de la Prairie 2**
**CH-1723 Marly (CH)**
Erfinder: **Rüfenacht, Werner**
**Route des Pralettes 23**
**CH-1723 Marly (CH)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 353 190 B1

Rank Xerox (UK) Business Services
(3.10/3.09/3.3.3)

## Beschreibung

Die vorliegende Erfindung betrifft neue Flexibilisatorkombinationen für Epoxidharze, Zusammensetzungen enthaltend diese Kombinationen und Epoxidharze, neue Komponenten besagter Kombinationen, die gehärteten Produkte aus den modifizierten Epoxidharzen und die Verwendung besagter Kombinationen zum Flexibilisieren von Epoxidharzen.

Aus der US-A-3,944,594 ist bekannt, dass man Ester von sterisch gehinderten Phenolen mit oligomeren Glykolen oder Thioglykolen zur Stabilisierung gegen den oxidativen Abbau von organischen Polymeren, unter anderem auch von Polydienen, einsetzen kann. Als Stabilisatoren werden diese Verbindungen in der Regel nur in kleinen Mengen eingesetzt.

Ferner ist bekannt, dass Epoxidharze durch Zusatz von Copolymeren auf Basis von Butadien und Acrylnitril oder durch Zusatz von Addukten solcher Copolymerer an Epoxidharze modifiziert werden können.

Aus der DE-A-3,331,903 ist bekannt, dass man elastifizierend wirkende Polyphenole, wie das Veresterungsprodukt eines höhermolekularen Diols mit einer Hydroxyphenylcarbonsäure, zur Herstellung von wasserdispergierbaren Bindemitteln für kationische Elektrotauchlacke einsetzen kann.

Solche Zusätze bewirken im allgemeinen eine Erhöhung der Schlagzähigkeit und der Flexibilität des gehärteten Produktes. Die Schälfestigkeit lässt im allgemeinen aber zu wünschen übrig. In der Regel werden durch den Einbau solcher Polymerer die Zugscherfestigkeit sowie die Glasübergangstemperatur reduziert.

In EP-A-252 725 werden bestimmmte Epoxyharz-Verbundwerkstoffe, die durch die Zugabe von nichtschmelzbaren Partikeln gekennzeichnet sind, beschrieben.

Weiterhin werden in EP-A-259 100 mehrphasige Epoxidharze bestimmter Zusammensetzung mit verbesserter Zähigkeit und Schlagfestigkeit beschrieben.

Es wurden jetzt Kombinationen von Schlagzähigkeits-Modifikatoren gefunden, die im Gemisch mit Epoxidharzen eine signifikante Erhöhung der Schälfestigkeit bewirken, eine verringerte Tendenz zur Rissfortpflanzung aufweisen und hohe Schälfestigkeiten ohne Verlust der Zugscherfestigkeit ermöglichen.

Ferner lassen sich mit diesen Modifikatoren, je nach Harzformulierung, elastische Produkte mit hoher Schälfestigkeit und tiefer Glasübergangstemperatur oder hochfeste Produkte mit hoher Glasübergangstemperatur und hoher Schälfestigkeit herstellen; die hochfesten Produkte zeichnen sich durch hohe Risszähigkeiten aus und die Rissfortpflanzung ist auch sehr hoher, schockartiger Schlagbeanspruchung deutlich herabgesetzt.

Aus den erfindungsgemässen Schlagzähigkeits-Modifikatoren lassen sich mit Epoxidharzen niedrigviskose Formulierungen herstellen, was bei der Verarbeitung von Vorteil ist.

Die gehärteten Epoxidharze zeichnen sich ferner durch eine gute Temperaturstabilität aus.

Die vorliegende Erfindung betrifft Zusammensetzungen enthaltend

A) ein flüssiges, bei Temperaturen unterhalb von 80°C fliessfähiges Copolymeres auf Basis von Butadien und mindestens einem polaren, ethylenisch ungesättigten Comonomeren und

B) eine Verbindung mit einem Molekulargewicht (Zahlenmittel) von 600 bis 20000 der Formel I

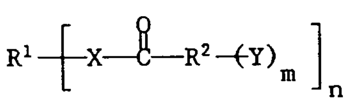

(I),

worin m 1 oder 2 ist, n 2 bis 6 bedeutet, X -O-, -S- oder $-NR^3-$ ist, Y ein Rest ist, der ausgewählt wird aus der Gruppe bestehend aus -OH, $-NHR^3$, -OCN,

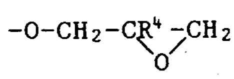 oder 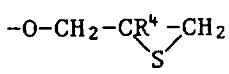,

$R^1$ ein hydroxyl-, mercapto- oder amino-terminierter Rest eines Polyalkylenglykols nach dem Entfernen der funktionellen Gruppe ist,

$R^2$ ein carbocyclisch-aromatischeer oder araliphatischer m+1-wertiger Rest ist, mit direkt an den aromatischen Kern gebundenen Gruppen Y,

$R^3$ Wasserstoff, $C_1$-$C_6$Alkyl oder Phenyl bedeutet und $R^4$ Methyl oder insbesondere Wasserstoff ist, wobei das Gewichtsverhältnis von A) zu B) im Bereich von 50:1 bis 1:50 liegt.

Komponente A) ist ein ausgewähltes flüssiges, elastomeres Copolymeres auf Butadienbasis und enthält vorzugsweise gegenüber Epoxidharzen reaktive Endgruppen.

Das Molekulargewicht dieser Copolymeren beträgt vorzugsweise 500-5000, insbesondere 1000-3000.

Diese Komponente kann als solche eingesetzt werden oder als Addukt an ein Epoxidharz, vorzugsweise an einen Diglycidylether auf Bisphenolbasis.

Unter einem "flüssigen Copolymeren" ist im Rahmen dieser Beschreibung eine Verbindung zu verstehen, die bei Temperaturen unterhalb von 80 °C fliessfähig ist und sich ohne weiteres mit einem Epoxidharz mischen lässt.

Beispiele für polare, ethylenisch ungesättigte Comonomere zur Herstellung von Komponente A) sind (Meth)acrylsäure, Ester der (Meth)acrylsäure, beispielsweise die Methyl- oder Ethylester, Amide der (Meth)-acrylsäure, Fumarsäure, Itaconsäure, Maleinsäure oder deren Ester oder Halbester, beispielsweise die Mono- oder Dimethylester, oder Maleinsäure- oder Itaconsäureanhydrid; Vinylester, beispielsweise Vinylacetat, polare Styrole, wie kernchlorierte oder kernbromierte Styrole, oder insbesondere Acrylnitril oder Methacrylnitril.

Neben polaren, ethylenisch ungesättigten Comonomeren kann Komponente A) noch weitere unpolare, ethylenisch ungesättigte Comonomere enthalten. Beispiele dafür sind Ethylen, Propylen oder insbesondere Styrol oder substituierte Styrole, wie Vinyltoluol.

Bei Komponente A) kann es sich um statistische Copolymere, Block-Copolymere oder um Pfropf-Copolymere handeln.

Der Anteil der Comonomeren in Komponente A) kann in weiten Bereichen schwanken. Diese Komponente wird so gewählt, dass sich in Kombination mit Komponente B) und gegebenenfalls mit einem Epoxidharz C) eine Elastomerphase ausbildet. Eine solche Elastomerphase ist in der Regel durch eine Glasübergangstemperatur von kleiner als 0 °C gekennzeichnet. Dabei kann es sich um homogene oder um heterogene Systeme handeln.

Eine Elastomerphase kann bereits in Komponente A) vorhanden sein; die Elastomerphase kann aber auch erst durch Auswahl geeigneter Komponenten A), B) und gegebenenfalls C) entstehen.

Wünscht man heterogene Systeme, so werden die Komponenten in der Regel so gewählt, dass die Differenz der Löslichkeitsparameter von A) und/oder B) zu C) zwischen 0,2 und 1,0, bevorzugt zwischen 0,2 und 0,6, liegt. Diese Auswahlkriterien sind beispielsweise von C.B. Bucknall in "Toughened Plastics", Kapitel 2, Applied Science Publishers Ltd., London 1977 beschrieben.

Besonders bevorzugte Komponenten A) sind flüssige Butadien-Acrylnitril-Copolymere.

Weitere ganz besonders bevorzugte Komponenten A) sind flüssige Butadien-Acrylnitril-Copolymere mit gegenüber Epoxidharzen reaktiven funktionellen Gruppen, wie beispielsweise Carboxyl-, Hydroxyl- oder Aminogruppen.

Beispiele für solche Copolymeren sind carboxyl- oder hydroxyl- oder aminhaltige Acrylnitril-Butadien-Kautschuke, beispielsweise Verbindungen vom Typ Hycar® der Fa. Goodrich.

Bevorzugte Typen solcher Kautschuke enthalten die Strukturelemente der folgenden Formeln IIa bis IId und die Endgruppen G

$-CH_2-CH=CH-CH_2-$ (IIa),

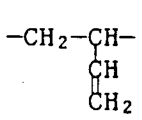 (IIb), 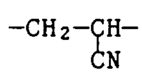 (IIc), 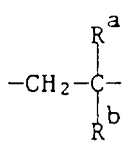 (IId),

worin $R^a$ Wasserstoff oder Methyl ist, $R^b$ -COOH, $-COOR^c$ oder $-CONH_2$ bedeutet, $R^c$ ein aliphatischer Rest, vorzugsweise Methyl, ist, und G ausgewählt wird aus der Gruppe bestehend aus -R-COOH, -R-OH,

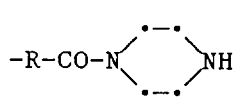 und 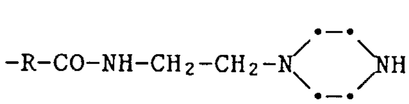 ,

worin R ein Alkylenrest ist; der Anteil der Reste IIa, IIb und IIc beträgt vorzugsweise 5-50 Gew.%, der Anteil des Rests IId beträgt vorzugsweise 0-30 Gew.%, bei Resten mit freien Carboxylgruppen bevorzugt 0-10

Gew.%, wobei die Mengenangaben auf die Gesamtmenge der Reste IIa, IIb, IIc und gegebenenfalls IId bezogen sind.

Komponente A) wird vorzugsweise als Addukt eines Butadien-Acrylnitril-Copolymerenmit gegenüber Epoxidharzen reaktiven funktionellen Gruppen an ein Epoxidharz eingesetzt. Die Herstellung solcher Addukte erfolgt in an sich bekannter Weise durch Erhitzen des reaktiven Butadien-Acrylnitril-Kautschuksund des Epoxidharzes mit gegebenenfalls einem Katalysator, so dass ein schmelzbares aber noch härtbares Vorkondensat entsteht. Als Katalysator verwendet man beispielsweise Triphenylphosphin, tertiäre Amine, quaternäre Ammonium- oder Phosphoniumsalze oder Chrom-Acetylacetonat.

Komponente B) leitet sich von hydroxyl-, mercapto- oder amino-terminierten präpolymeren Polyethern ab, deren Endgruppen wie unten beschrieben modifiziert sind. Solche Präpolymeren sind an sich bekannt.

Das Molekulargewicht solcher Präpolymeren liegt in der Regel im Bereich von 500 bis 20000 (Zahlenmittel), vorzugsweise im Bereich von 500 bis 3000.

Die mittlere Funktionalität dieser Präpolymeren beträgt wenigstens 2, bevorzugt 2 bis 3.

Besonders bevorzugt setzt man solche präpolymeren Polyether ein, die zu wasserunlöslichen Verbindungen der Formel I führen. Darunter versteht man im Rahmen dieser Beschreibung Verbindungen, die sich zu weniger als 5 Gew.%, vorzugsweise zu weniger als 1 Gew.%, in Wasser lösen, und die bei der Wasserlagerung nur eine geringe Menge Wasser aufnehmen, vorzugsweise weniger als 5 Gew.%, oder dabei lediglich eine geringe Quellung zeigen.

Die präpolymeren Polyether können gegebenenfalls aufgepfropfte 1-Olefine enthalten, wobei besagte 1-Olefine neben unpolaren auch polare Gruppen, wie Nitril-, Ester- oder Anidgruppen, enthalten können.

$R^1$ ist ein hydroxyl-, mercapto- oder amino-terminierter Rest eines Polyalkylenglykols, insbesondere eines Polypropylenglykols oder Polybutylenglykols, nach dem Entfernen der funktionellen Gruppen.

Hydroxyl-terminierte Polyalkylenglykole lassen sich beispielsweise durch anionische Polymerisation, Copolymerisation oder Blockcopolymerisation von Alkylenoxiden, wie Ethylenoxid, Propylenoxid oder Butylenoxid, mit di- oder polyfunktionellen Alkoholen, wie 1,4-Butandiol, 1,1,1-Trimethylolethan, 1,1,1-Trimethylolpropan, 1,2,6-Hexantriol, Glycerin, Pentaerythrit oder Sorbit, oder mit Aminen, wie Methylamin, Ethylendiamin oder 1,6-Hexylendiamin, als Starterkomponenten, oder durch kationische Polymerisation oder Copolymerisation cyclischer Ether, wie Tetrahydrofuran, Propylenoxid oder Ethylenoxid mit sauren Katalysatoren, wie $BF_3$-Etherat, oder durch Polykondensation von unter Wasserabspaltung polykondensierbaren Glykolen, wie 1,6-Hexandiol, in Gegenwart saurer Veretherungskatalysatoren, wie p-Toluolsulfonsäure, erhalten.

Ferner kann man auch Oxalkylierungsprodukte von Phosphorsäure oder phosphoriger Säure mit Ethylenoxid, Propylenoxid, Butylenoxid oder Styroloxid verwenden.

Amino-terminierte Polyalkylenglykole leiten sich beispielsweise von den oben beschriebenen hydroxyl-terminierten Polyalkylenglykolen ab, indem man solche Verbindungen enthaltend primäre Hydroxylgruppen, beispielsweise Polybutylenglykol, mit Acrylnitril umsetzt und die Produkte anschliessend hydriert, oder indem man solche Verbindungen enthaltend sekundäre Hydroxylgruppen mit Ammoniak umsetzt. Geeignete amino-terminierte Polypropylenglykole sind die kommerziell unter der Bezeichnung "Jeffamine®" von der Firma Texaco erhältlichen Verbindungen.

Mercapto-terminierte Polyalkylenglykole können in an sich bekannter Weise aus den entsprechenden hydroxyl- oder amino-terminierten Polyalkylenglykolen hergestellt werden, beispielsweise durch Anlagerung von Mercaptocarbonsäuren oder deren Estern, wie Mercaptoessigsäure(estern), an hydroxyl- oder amino-terminierte Polyalkylenglykole, oder durch Anlagerung von Episulfiden an hydroxyl- oder amino-terminierte Polyalkylenglykole.

Zu den bevorzugten Resten $R^1$, die sich von den oben aufgezählten Polyalkylenglykolderivaten ableiten, zählen die Strukturelemente der Formeln IIIa, IIIb, IIIc, IIId und IIIe

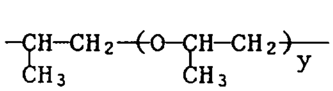 (IIIa), 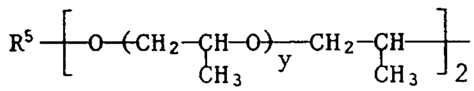 (IIIb),

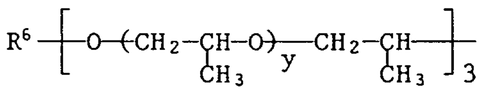 (IIIc), 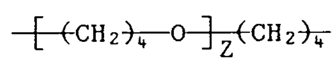 (IIId),

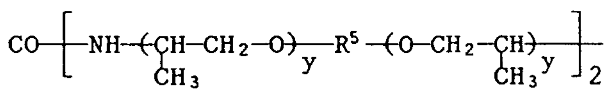 (IIIe),

worin y 5 bis 90, insbesondere 10 bis 90, bedeutet, Z 10 bis 40 ist, $R^5$ ein Rest eines aliphatischen Diols nach dem Entfernen der beiden OH-Gruppen ist, und $R^6$ ein Rest eines aliphatischen Triols nach dem Entfernen der drei OH-Gruppen ist.

Weitere bevorzugte präpolymere hydroxyl-, mercapto- oder amino-terminierte Polyalkylenglykole enthalten aufgepfropfte 1-Olefine, insbesondere Styrol oder Acrylsäurederivate, wie Acrylsäureester oder Acrylnitril.

Der Index n ist vorzugsweise 2 oder 3 und der Index m bedeutet vorzugsweise 1.

X ist vorzugsweise -O-, -S- oder -NH-.

Y ist vorzugsweise -OH, $-NH_2$, -OCN,

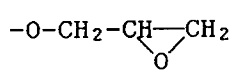 oder 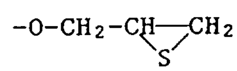,

insbesondere -OH, -OCN,

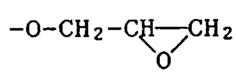 oder 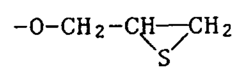.

$R^2$ als carbocyclisch-aromatischer oder araliphatischer m + 1-wertiger Rest mit direkt an den aromatischen Kern gebundenen Gruppen Y ist in der Regel ein ein- oder mehrkerniger aromatischer Rest, der unsubstituiert oder durch inerte Reste substituiert sein kann. Mehrkernige Reste können kondensiert sein oder die Kerne können über direkte C-C-Bindungen oder über Brückengruppen miteinander verknüpft sein.

Vorzugsweise handelt es sich bei $R^2$ um einen zweiwertigen ein- oder zweikernigen aromatischen Rest oder um einen zweiwertigen einkernigen araliphatischen Rest, insbesondere um einen Rest einer Hydroxybenzoesäure.

Beispiele für inerte Substituenten sind Alkyl, Alkenyl, Alkinyl, Alkoxy oder Halogen.

Vorzugsweise ist $R^2$ ein Rest der Formeln IVa, IVb oder IVc

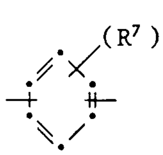 (IVa), 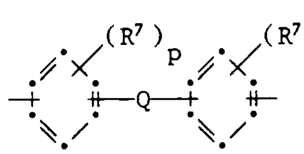 (IVb), 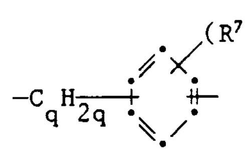 (IVc),

worin $R^7$ $C_1$-$C_6$ Alkyl, $C_2$-$C_6$ Alkenyl, $C_2$-$C_6$ Alkinyl, $C_1$-$C_6$ Alkoxy, Halogen, insbesondere Chlor oder Brom, und Phenyl bedeutet, p eine ganze Zahl von 0 bis 3, insbesondere 0 oder 1, ist q 1, 2 oder 3 ist, insbesondere 1 oder 2, und Q eine direkte Bindung, $-C_qH_{2q}-$, insbesondere $-CH_2-$ oder $-C(CH_3)_2-$ ist, oder -O-, -S-, $-SO_2-$, -CO- oder $-C(CF_3)_2-$ bedeutet.

In bevorzugten Verbindungen der Formel I bedeutet m 1, n ist 2 oder 3, $R^1$ ist ein Rest eines hydroxyl-, mercapto- oder amino-terminierten Polyalkylenglykols nach dem Enfernen der funktionellen Gruppen, und $R^2$ ist ein Rest der Formeln IVd, IVe, IVf oder IVg

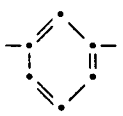 (IVd), 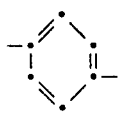 (IVe), 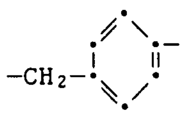 (IVf), 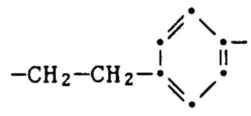 (IVg).

$R^3$ ist vorzugsweise Methyl oder insbesondere Wasserstoff.

Bedeuten irgendwelche Reste $C_1$-$C_6$Alkyl, so kann es sich dabei um geradkettige oder verzweigte Reste handeln. Bevorzugt werden die geradkettigen Reste.

Spezifische Beispiele für Alkylreste sind Methyl, Ethyl, n-Propyl, Isopropyl, n-Butyl, Isobutyl, n-Pentyl oder n-Hexyl. Bevorzugt wird Methyl.

Bedeuten irgendwelche Reste $C_1$-$C_6$Alkoxy, so kann es sich dabei um geradkettige oder verzweigte Reste handeln. Bevorzugt werden die geradkettigen Reste.

Spezifische Beispiele für Alkoxyreste sind Methoxy, Ethoxy, n-Propyloxy, Isopropyloxy, n-Butyloxy, Isobutyloxy, n-Pentyloxy oder n-Hexyloxy. Bevorzugt wird Methoxy.

Bedeuten irgendwelche Reste $C_2$-$C_6$Alkenyl, so handelt es sich dabei vorzugsweise um geradkettige Reste, beispielsweise um Vinyl, Allyl, 1-Propenyl, 1-Butenyl, 1-Pentenyl oder 1-Hexenyl. Bevorzugt werden Vinyl und Allyl.

Bedeuten irgendwelche Reste $C_2$-$C_6$Alkinyl, so handelt es sich dabei vorzugsweise um geradkettige Reste, beispielsweise um Ethinyl, Propargyl, 1-Butinyl, 1-Pentinyl oder 1-Hexinyl. Bevorzugt wird Propargyl.

Bedeuten irgendwelche Reste Halogen, so handelt es sich dabei vorzugsweise um Chlor oder um Brom.

Die Verbindungen der Formel I können in an sich bekannter Weise durch Verkappen der Hydroxyl-, Mercapto- oder Amino-Endgruppen der präpolymeren Polyether mit einer dem Anteil dieser Endgruppen im wesentlichen entsprechenden molaren Menge von Hydroxylcarbonsäuren HOOC-$R^2$-$(OH)_m$ bzw. von Aminocarbonsäuren HOOC-$R^2$-$(NHR^3)_m$ oder deren Esterderivaten erhalten werden.

Beispiele für bevorzugte Hydroxyl- oder Aminocarbonsäure(derivate) sind p-Hydroxybenzoesäure, p-Aminobenzoesäure, Salicylsäure und Anthranilsäure, sowie deren Methyl- oder Ethylester.

Die Polyester- oder Polyamidharze der Formel I können durch allgemeine Arbeitsweisen, die bei der Herstellung solcher Harze Anwendung finden, hergestellt werden. So kann man zweckmässigerweise die Veresterung durch Schmelzkondensation der Carbonsäurekomponente(n) und des Polyols oder des Polyamins durchführen. Die Reaktionsteilnehmer werden dabei beispielsweise unter Rühren bis zu einer Temperatur von 240 °C erhitzt. Dabei kann es sich anbieten, ein inertes Gas, wie beispielsweise Stickstoff, durch die Reaktionsmischung zu leiten, um das während der Reaktion gebildete Wasser oder den Alkohol, wenn ein Ester als funktionalisiertes Carbonsäurederivat eingesetzt wurde, zu entfernen. Auch kann am Ende der Veresterungsreaktion gegebenenfalls ein leichtes Vakuum angelegt werden, um restliche niedermolekulare Spaltprodukte zu entfernen. Der bevorzugte Temperaturbereich der Schmelzkondensation beträgt 160-200 °C. Die Polykondensation kann gegebenenfalls in Gegenwart eines Katalysators durchgeführt werden. Beispiele dafür sind Sn-IV-Verbindungen, wie Dibutylzinnoxid oder Dibutylzinndilaurat.

Man kann aber auch andere Formen der Polykondensation anwenden, wie beispielsweise die Polykondensation in Lösung, in Suspension oder in Masse.

Die Anthranilamide können durch Umsetzung von amino-terminierten Polyethern oder amino-terminierten segmentierten Polyamiden mit Isatoesäureanhydrid hergestellt werden.

Die Verbindungen der Formel I, worin Y -OCN ist, lassen sich ausgehend von den Verbindungen der Formel I, worin Y -OH ist, herstellen. Dazu setzt man die phenol-terminierten Polyester oder Polyamide der Formel I mit Halogencyan, insbesondere mit Bromcyan in Gegenwart einer Base, beispielsweise eines tertiären Amins, wie Triethylamin, in einem inerten, aprotischen Lösungsmittel um.

Beispiele für inerte, aprotische Lösungsmittel sind aromatische Kohlenwasserstoffe, wie Toluol oder Xylol, oder Ketone, wie Methylisobutylketon.

Die Umsetzung erfolgt in der Regel durch Vermischen von im wesentlichen äquivalenten Mengen von Verbindungen der Formel I, worin Y -OH ist, und Halogencyan unter Kühlung, beispielsweise bei 0 °C, und durch Zugabe des tertiären Amins bei dieser Temperatur.

Die Verbindungen der Formel I, worin Y

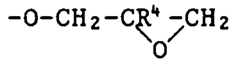

ist, lassen sich ausgehend von den Verbindungen der Formel I, worin Y -OH ist, herstellen. Dazu setzt man die phenol-terminierten Polyester oder Polyamide der Formel I mit Epichlorhydrin oder $\beta$-Methylepichlorhydrin in Gegenwart einer Base, beispielsweise eines Alkalicarbonats oder eines Alkalihydroxyds, in einem inerten Lösungsmittel um. Beispiele für solche Lösungmittel sind weiter oben aufgeführt. Die Addition von Epichlorhydrin oder $\beta$-Methylepichlorhydrin und die darauffolgende Dehydrohalogenierung können in einer oder in zwei Stufen durchgeführt werden.

Die Umsetzung erfolgt in der Regel bei erhöhter Temperatur, beispielsweise im Bereich von 60-120 °C.

Die analogen Episulfide können durch in an sich bekannter Weise durch Reaktion der oben beschriebenen Epoxide der Formel I mit Kaliumrhodanid oder mit Thioharnstoff hergestellt werden.

Die Verbindungen der Formel I besitzen in der Regel ein Molekulargewicht (Zahlenmittel) von 600 bis 20000, insbesondere von 800 bis 5000.

Die Verbindungen der Formel I, worin Y -OCN oder

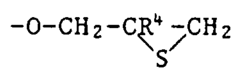

ist sind neu und stellen ebenfalls einen Gegenstand der Erfindung dar.

Die erfindungsgemässen Zusammensetzungen aus A) und B) lassen sich mit Epoxidharzen zu gehärteten Produkten mit den weiter oben geschilderten vorteilhaften Eigenschaften verarbeiten.

Die Erfindung betrifft daher auch Zusammensetzungen enthaltend Komponenten A) und B), wie oben definiert, und C) ein Epoxidharz mit wenigstens zwei 1,2-Epoxidgruppen pro Molekül; oder enthaltend ein Addukt aus Komponente A) und einem Epoxidharz, sowie Komponente B) und gegebenenfalls Komponente C); oder enthaltend Komponente A), ein Addukt aus Komponente B) und einem Epoxidharz und gegebenenfalls Komponente C); oder enthaltend ein Addukt aus Komponente A) und einem Epoxidharz, ein Addukt aus Komponente B) und einem Epoxidharz sowie gegebenenfalls Komponente C).

Besonders bevorzugt werden Kombinationen aus Komponente A) und einem Addukt aus einem Epoxidharz C) an eine Verbindung der Formel I, worin Y -OH ist. Addukte von Komponente C) an Komponente B) lassen sich in Analogie zur oben beschriebenen Adduktbildung von reaktiven Komponenten A) mit Epoxidharzen herstellen.

Die Herstellung der erfindungsgemässen Zusammensetzungen kann in üblicher Weise durch Vermischen der Komponenten mit Hilfe bekannter Mischaggregate (Rührer, Walzen) erfolgen.

Als Komponente C) kann im Prinzip jede in der Technik der Epoxidharze übliche Verbindung eingesetzt werden. Man kann auch Mischungen mehrerer Epoxidharze verwenden.

Beispiele für Epoxidharze sind:

I) Polyglycidyl- und Poly-($\beta$-methylglycidyl)-ester, die beispielsweise durch Umsetzung von einer Verbindung enthaltend mindestens zwei Carboxylgruppen im Molekül mit Epichlorhydrin, Glycerindichlorhydrin oder mit $\beta$-Methylepichlorhydrin in Gegenwart von Basen erhalten werden können.

Beispiele für Verbindungen mit mindestens zwei Carboxylgruppen im Molekül sind aliphatische Polycarbonsäuren; oder cycloaliphatische Polycarbonsäuren; oder aromatische Polycarbonsäuren, wie bereits weiter oben als Polyester- oder Polyamid-Bildungskomponenten erwähnt. Beispiele für Tri- und höhere Carbonsäuren sind insbesondere aromatische Tri- oder Tetracarbonsäuren, wie Trimellithsäure, Trimesinsäure, Pyromellithsäure oder Benzophenontetracarbonsäure, sowie dimerisierte oder trimerisierte Fettsäuren, wie sie beispielsweise unter der Bezeichnung Pripol® im Handel sind; oder Copolymere von (Meth)acrylsäure mit copolymerisierbaren Vinylmonomeren, wie beispielsweise die 1:1 Copolymeren von Methacrylsäure mit Styrol oder mit Methacrylsäuremethylester.

II) Polyglycidyl- und Poly-($\beta$-methylglycidyl)-ether, die beispielsweise durch Umsetzung einer Verbindung enthaltend mindestens zwei alkoholische Hydroxylgruppen und/oder phenolische Hydroxylgruppen im Molekül mit Epichlorhydrin, Glycerindichlorhydrin oder mit $\beta$-Methylepichlorhydrin unter alkalischen Bedingungen oder in Anwesenheit eines sauren Katalysators und anschliessender Alkalibehandlung erhalten werden können.

Beispiele für Verbindungen mit mindestens zwei alkoholischen Hydroxylgruppen und/oder phenolischen Hydroxylgruppen im Molekül sind aliphatische oder cycloaliphatische Alkohole, wie bereits weiter oben als Polyesterbildungskomponenten erwähnt, oder Alkohole enthaltend aromatische Gruppen, wie N,N-Bis-(2-hydroxyethyl)-anilin oder p,p'-Bis-(2-hydroxyethylamino)-diphenylmethan; oder ein- oder mehrkernige Phenole, wie Resorcin, Hydrochinon, Bis-(4-hydroxyphenyl)-methan, 2,2-Bis-(4-hydroxyphenyl)-propan, bromiertes 2,2-Bis-(4-hydroxyphenyl)-propan, Bis-(4-hydroxyphenyl)-ether, Bis-(4-hydroxyphenyl)-sulfon, 1,1,2,2-Tetrakis-(4-hydroxyphenyl)-ethan oder Novolake, die durch Kondensation von

Aldehyden, wie Formaldehyd, Acetaldehyd, Chloral oder Furfuraldehyd mit gegebenenfalls alkyl- oder halogen-substituierten Phenolen, wie Phenol, den oben beschriebenen Bisphenolen, 2- oder 4-Methylphenol, 4-tert.Butylphenol, p-Nonylphenol oder 4-Chlorphenol erhältlich sind.

III) Poly-(N-glycidyl)-verbindungen, die beispielsweise durch Dehydrochlorierung von Reaktionsprodukten von Epichlorhydrin mit Aminen, die mindestens zwei Aminowasserstoffatome enthalten, hergestellt werden können.

Beispiele für Amine, die solchen Epoxidharzen zugrunde liegen, sind aliphatische oder cycloaliphatische Amine, wie weiter oben als Polyamidbildungskomponenten erwähnt, aromatische Amine, wie Anilin, p-Toluidin, Bis-(4-aminophenyl)-methan, Bis-(4-aminophenyl)-sulfon, oder Bis-(4-aminophenyl)-ether; oder araliphatische Amine, wie m-Xylylendiamin.

Zu den Poly-(N-glycidyl)-verbindungen zählen aber auch Triglycidylisocyanurat, N,N'-Diglycidylderivate von Cycloalkylenharnstoffen, wie von Ethylenharnstoff oder von 1,3-Propylenharnstoff, und N,N'-Diglycidylderivate von Hydantoinen, wie von 5,5-Dimethylhydantoin.

IV) Poly-(S-glycidyl)-verbindungen, wie beispielsweise Di-S-glycidylderivate, die sich von Dithiolen, wie Ethan-1,2-dithiol oder von Bis-(4-mercaptomethylphenyl)-ether, ableiten.

V) Cycloaliphatische Epoxidharze oder Epoxidierungsprodukte von Dienen oder Polyenen, wie cycloaliphatische Epoxidharze, die beispielsweise durch Epoxidierung ethylenisch ungesättigter cycloaliphatischer Verbindungen hergestellt werden können. Beispiele dafür sind 1,2-Bis-(2,3-epoxicyclopentyloxi)-ethan, 2,3-Epoxicyclopentylglycidylether, Cyclohexan-1,2-dicarbonsäure Diglycidylester, 3,4-Epoxicyclohexylglycidylether, Bis-(2,3-epoxicyclopentyl)-ether, Bis-(3,4-epoxicyclohexyl)-ether, 5(6)-Glycidyl-2-(1,2-epoxiethyl)-bicyclo[2.2.1]heptan, Dicyclopentadiendioxid, Cyclohexa-1,3-diendioxid, 3,4-Epoxi-6-methylcyclohexylmethyl-3',4'-epoxi-6'-methylcyclohexancarboxylat oder 3,4-Epoxicyclohexylmethyl-3',4'-epoxicyclohexancarboxylat.

Es lassen sich aber auch Epoxidharze verwenden, bei denen die 1,2-Epoxidgruppen an unterschiedliche Heteroatome bzw. funktionelle Gruppen gebunden sind; zu solchen Verbindungen zählen beispielsweise das N,N,O-Triglycidylderivat des 4-Aminophenols, der Glycidylether-glycidylester der Salicylsäure, N-Glycidyl-N'-(2-glycidyloxipropyl)-5,5-dimethylhydantoin oder 2-Glycidyloxy-1,3-bis-(5,5-dimethyl-1-glycidylhydantoin-3-yl)-propan.

Bevorzugt sind Diglycidylether auf Bisphenol Basis, insbesondere auf Basis von Bisphenol A.

Die erfindungsgemässen Zusammensetzungen enthalten in der Regel noch zusätzliche dem Fachmann an sich bekannte Härter D), gegebenenfalls in Kombination mit einem Beschleuniger E).

Beispiele für Härter D) sind Polyamine mit mindestens zwei primären und/oder sekundären Aminogruppen, wie aliphatische Amine, beispielsweise Propan-1,3-diamin, Hexamethylendiamin, Diethylentriamin, Triethylentetramin, 2,2,4-Trimethylhexan-1,6-diamin; oder cycloaliphatische Amine, beispielsweise Bis-(4-aminocyclohexyl)-methan oder 3-Aminomethyl-3,5,5-trimethylcyclohexylamin (Isophorondiamin); oder aromatische Amine, beispielsweise Bis-(4-aminophenyl)-methan, Anilin-Formaldehyd-Harze, Bis-(4-aminophenyl)-sulfon, Bis-(4-aminophenyl)-methan oder 2,2-Bis-(4-aminophenyl)-propan; oder araliphatische Amine, wie Xylylendiamin; oder heterocyclische Amine.

Weitere Beispiele für Härter D) sind Polyaminoamide, wie beispielsweise solche aus aliphatischen Polyaminen und dimerisierten oder trimerisierten Fettsäuren; oder die Amide einschliesslich der substituierten Harnstoffe, insbesondere der Harnstoffe mit aromatischen Resten, wie N-(4-Chlorphenyl)-N,N'-dimethylharnstoff, N-(3-Chlor-4-methylphenyl)-N',N'-dimethylharnstoff (Chlortoluron), N-(2-hydroxyphenyl)-N,N'-dimethylharnstoff oder 2,4-Bis-(N,N-dimethylureido)-toluol; oder Polyphenole, wie Resorcin, Hydrochinon, 2,2-Bis-(4-hydroxyphenyl)-propan (Bisphenol A) und Novolake auf Basis von Mono- oder Polyphenolen, wie Phenol oder Kresolen, und Aldehyden, wie Formaldehyd, Acetaldehyd oder Chloral; oder Polythiole, wie die im Handel unter der Bezeichnung "Thiokole®" erhältlichen Polythiole; oder Polycarbonsäuren und insbesondere deren Anhydride, wie beispielsweise Phthalsäureanhydrid, Tetrahydrophthalsäureanhydrid, Hexahydrophthalsäureanhydrid, Hexachlorendomethylentetrahydrophthalsäureanhydrid, Pyromellitsäureanhydrid, Benzophenon-3,3',4,4'-tetracarbonsäuredianhydrid, die Säuren der vorgenannten Anhydride sowie auch Isophthalsäure und Terephthalsäure.

Ferner können auch katalytisch wirkende Härtungsmittel eingesetzt werden, wie beispielsweise tertiäre Amine, z.B. 2,4,6-Tris-(dimethylaminomethyl)-phenol; Mannichbasen, oder Imidazole, wie 2-Methylimidazol, 2-Phenylimidazol, 2-Ethyl-4-methylimidazol, 1-Benzyl-2-methylimidazol oder 1-Cyanoethyl-2-methylimidazol; Zinnsalze von Alkansäuren, wie beispielsweise Zinnoctoat; Friedel-Crafts-Katalysatoren, wie beispielsweise Bortrifluorid und Bortrichlorid und deren Komplexe und Chelate, die durch Umsetzung von Bortrifluorid bzw. Bortrichlorid mit beispielsweise 1,3-Diketonen, Aminen oder Ethern erhalten werden.

Weitere geeignete Härter sind Amidine, wie beispielsweise Dicyandiamid oder 1-Cyan-3-(niedrigalkyl)-guanidine, wie z.B. die 3-Methyl-, 3,3-Dimethyl- oder 3,3-Diethylderivate.

Beispiele für Härtungsbeschleuniger E) sind tertiäre Amine, deren Salze oder quaternäre Ammoniumverbindungen, wie Benzyldimethylamin, 2,4,6-Tris-(dimethylaminomethyl)-phenol, 4-Aminopyridin oder Tetramethylammoniumchlorid; oder die Imidazole oder die substituierten Harnstoffe, wie oben erwähnt.

Je nach Anteil der Komponenten A) und B) lassen sich die Eigenschaften des gehärteten Endproduktes variieren.

Die folgenden Prozentangaben beziehen sich jeweils auf das Gesamtgewicht der Komponenten A), B) und C).

Wünscht man Produkte mit hoher Festigkeit, hoher Glasübergangstemperatur, hoher Schälfestigkeit, hoher Schlagzähigkeit und hoher Rissfortpflanzungsbeständigkeit (Risszähigkeit), so sollte der Anteil der Komponenten A) und B) in der Regel 60 Gew.% nicht überschreiten. Solche Systeme sind in der Regel heterogen. Die untere Grenze richtet sich nach den gewünschten Eigenschaften, beispielsweise der Schälfestigkeit. In der Regel sollten Komponenten A) und B) mehr als 5 Gew.%, bevorzugt mehr als 10 Gew.% ausmachen.

Wünscht man hingegen Produkte mit einer möglichst hohen Flexibilität, so sollten wenigstens 40 Gew.%, bevorzugt mehr als 60 Gew.%, an Komponenten A) und B) vorliegen.

Wenn Komponente A) und/oder B) durch Adduktbildung mit einem Epoxidharz modifiziert worden ist, so ist eine separate Komponente C) nicht unbedingt erforderlich.

Das Gewichtsverhältnis von A) zu B) kann in weiten Grenzen variiert werden. Der Bereich von A) zu B) ist 50:1 bis 1:50, bevorzugt 20:1 bis 10:1, besonders bevorzugt 5:1 bis 1:5.

Der Anteil des Epoxidharzes C) and der Gesamtmenge aus A), B) und C) kann ebenfalls in weiten Grenzen variiert werden. Für gehärtete Produkte mit einer erhöhten Flexibilität wird man im allgemeinen geringere Mengen von C), beispielsweise 10 bis 30 Gew.% einsetzen, wobei Komponente C) auch als Addukt an A) vorliegen kann, während für gehärtete Produkte mit einer hohen Festigkeit im allgemeinen grössere Mengen an C), beispielsweise 50 bis 95 Gew.%, bevorzugt 60 bis 80 Gew.%, eingesetzt werden.

Die Härtung der erfindungsgemässen Zusammensetzungen kann bei tiefen Temperaturen, beispielsweise bei Raumtemperatur, oder in der Hitze vorgenommen werden.

Im allgemeinen liegen die Härtungstemperaturen bei der Heisshärtung zwischen 80 und 250 °C, bevorzugt zwischen 100 und 180 °C.

Die Härtung kann gewünschtenfalls auch in zwei Stufen vorgenommen werden, indem man z.B. den Härtungsvorgang unterbricht oder, falls man ein Härtungsmittel für höhere Temperaturen einsetzt, die härtbare Mischung bei tieferen Temperaturen teilweise härten lässt. Die dabei erhaltenen Produkte sind noch schmelzbare und lösliche Präkondensate (sogenannte "B-Stufenharze") und eignen sich z.B. für Pressmassen, Sinterpulver oder Prepregs.

Bevorzugt werden heisshärtbare Systeme, worin Komponenten A), B) und C) in Kombination mit primären und/oder sekundären aromatischen Aminen oder mit Amidinen, insbesondere mit Dicyandiamid, als Härter D) eingesetzt werden; dabei können gegebenenfalls Beschleuniger, insbesondere Beschleuniger auf Harnstoffbasis, mit verwendet werden.

In dieser Ausführungsform setzt man als Komponente B) insbesondere die Verbindungen der Formel I ein, worin Y -OH, -OCN,

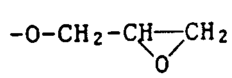 und 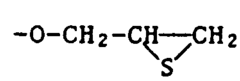

ist oder worin als Komponente B) ein Addukt eines Epoxidharzes C) an eine Verbindung der Formel I mit Y = -OH vorliegt.

Zusammensetzungen enthaltend Komponenten A) und B), worin Komponente B) Verbindungen der Formel I mit Y = $-NHR^3$ enthält, verwendet man vorzugsweise zur Herstellung von Zweikomponentenklebern auf Epoxidbasis, die bei Raumtemperatur aushärten. Dazu kombiniert man die Zusammensetzung enthaltend Komponenten A) und B) in an sich bekannter Weise erst kurz vor der Verarbeitung mit dem Epoxidharz C).

Gewünschtenfalls kann man den härtbaren Gemischen zur weiteren Herabsetzung der Viskosität reaktive Verdünner, wie z.B. Styroloxid, Butylglycidylether, 2,2,4-Trimethylpentylglycidylether, Phenylglycidylether, Kresylglycidylether oder Glycidylester von synthetischen, hochverzweigten, in der Hauptsache tertiären aliphatischen Monocarbonsäuren, zusetzen.

Als weitere übliche Zusätze können die erfindungsgemässen Gemische ferner Weichmacher, Streck-, Füll- und Verstärkungsmittel, wie beispielsweise Steinkohlenteer, Bitumen, Textilfasern, Glasfasern, Asbestfasern, Borfasern, Kohlenstoff-Fasern, mineralische Silikate, Glimmer, Quarzmehl, Aluminiumoxidhydrat,

Bentonite, Wollastonit, Kaolin, Kieselsäureaerogel oder Metallpulver, z.B. Aluminiumpulver oder Eisenpulver, ferner Pigmente und Farbstoffe, wie Russ, Oxidfarben und Titandioxid, sowie Flammschutzmittel, Thixotropiemittel, Verlaufmittel (die zum Teil auch als Formtrennmittel Anwendung finden), wie Silicone, Wachse und Stearate, oder Haftvermittler, Antioxidantien und Lichtschutzmittel enthalten. Bei der Härtung mit Phenolen oder aromatischen Aminen setzt man vorzugsweise temperaturbeständige Thermoplaste, insbesondere aromatische Polyether, wie Poly-(2,6-dimethylphenol), Polyethersulfone, Polyetherimide oder Polyetherketone zu.

Die erfindungsgemässen Gemische lassen sich ganz allgemein zur Herstellung von gehärteten Produkten einsetzen, und können in der dem jeweils speziellen Anwendungsgebiet angepassten Formulierung zur Herstellung von Klebstoffen, Klebefilmen, Patches, Dichtungsmassen, Lacken oder Matrixharzen eingesetzt werden.

Die Erfindung betrifft auch die Verwendung der härtbaren Gemische für die oben erwähnten Zwecke, sowie die Verwendung der Zusammensetzungen aus Komponenten A) und B) als Flexibilisatoren für Epoxidharze.

Die gehärteten Produkte zeichnen sich durch die eingangs geschilderten vorteilhaften Eigenschaften aus. Die Erfindung betrifft daher auch die Produkte erhältlich durch Härtung von Zusammensetzungen enthaltend A), B) und C) oder enthaltend Addukte von A) und/oder B) an Epoxidharze. Die folgenden Beispiele erläutern die Erfindung. Dabei bedeuten Mengenangaben Gewichtsteile, falls keine anderen Angaben vorliegen.

A) Herstellung der Präpolymeren

Beispiel 1: Unter Stickstoff werden 270 g p-Hydroxybenzoesäureethylester und 893 g Bis-(3-aminopropyl)-polytetrahydrofuran ($M_n$ = 1100) in Gegenwart von 4 g Dibutylzinnoxid 8 Stunden lang auf 220 °C erhitzt, wobei Ethanol abdestilliert. Man erhält 1056 g eines viskosen Harzes mit den folgenden Analysedaten:
Viskosität (nach Epprecht): $\eta_{25}$ = 42880 mPas;
Phenolgehalt: 1,38 Val/kg;
Molekulargewicht (GPC, in THF): $M_n$ = 1680; $M_w/M_n$ = 2,2.

Beispiel 2: Unter Stickstoff werden 33,2 g p-Hydroxybenzoesäureethylester und 210 g Bis-(3-aminopropyl)-polytetrahydrofuran ($M_n$ = 2100) in Gegenwart von 0,5 g Dibutylzinnoxid 8 Stunden lang auf 220 °C erhitzt, wobei Ethanol abdestilliert. Man erhält 226 g eines viskosen Harzes mit den folgenden Analysedaten:
Viskosität (nach Epprecht): $\eta_{25}$ = 12000 mPas;
Phenolgehalt: 0,72 Val/kg;
Molekulargewicht (GPC, in THF): $M_n$ = 2810; $M_w/M_n$ = 2,6.

Beispiel 3: Unter Stickstoff werden 1000 g dihydroxylterminiertes Polytetrahydrofuran ($M_n$ = 1000) und 332 g p-Hydroxybenzoesäureethylester in Gegenwart von 5 g Dibutylzinnoxid 10 Stunden lang auf 220 °C erhitzt, wobei Ethanol abdestilliert. Man erhält 1236 g eines viskosen Harzes mit den folgenden Analysedaten:
Viskosität (nach Epprecht): $\eta_{25}$ = 6880 mPas;
Phenolgehalt: 1,54 Val/kg;
Molekulargewicht (GPC, in THF): $M_n$ = 1560; $M_w/M_n$ = 2,3.

Beispiel 4: Unter Stickstoff werden 110 g Bis-(3-aminopropyl)-polytetrahydrofuran ($M_n$ = 1000) und 32,6 g Isatoesäureanhydrid 6 Stunden bei 120 °C zur Reaktion gebracht. Man erhält 127 g eines viskosen Harzes mit den folgenden Analysedaten:
Viskosität (nach Epprecht): $\eta_{25}$ = 6320 mPas;
Phenolgehalt: 1,16 Val/kg;
Molekulargewicht (GPC, in THF): $M_n$ = 1600; $M_w/M_n$ = 2,1.

Beispiel 5: Unter Stickstoff werden 500 g bisaminoterminiertes Polypropylenglykol ($M_n$ = 2000) und 83 g p-Hydroxybenzoesäureethylester in Gegenwart von 2 g Dibutylzinnoxid 6 Stunden lang auf 220 °C erhitzt. Man erhält 548 g eines viskosen Harzes mit den folgenden Analysedaten:
Viskosität (nach Epprecht): $\eta_{25}$ = 2560 mPas;
Phenolgehalt: 0,73 Val/kg.

Beispiel 6: Unter Stickstoff werden 500 g trisaminoterminiertes Polypropylenglykol ($M_n$ = 5000) und 50 g p-Hydroxybenzoesäureethylester in Gegenwart von 2 g Dibutylzinnoxid 6 Stunden lang auf 210 °C erhitzt. Man erhält 524 g eines viskosen Harzes mit den folgenden Analysedaten:
Viskosität (nach Epprecht): $\eta_{25}$ = 3360 mPas;

Phenolgehalt: 0,44 Val/kg.

Beispiel 7: Unter Stickstoff erhitzt man 730 g Bisphenol-A Diglycidylether (Epoxidgehalt 5,4 Val/kg), 200 g carboxylterminiertes Acrylnitril/Butadien Copolymer (26 % Acrylnitrilgehalt, Säurezahl 32 mg KOH/g), 64 g Bisphenol A und 5 g Triphenylphosphin 3 Stunden lang bei 130 °C, bis sich ein viskoses Harz mit einem Epoxidgehalt von 3,3 Val/kg und einer Viskosität nach Epprecht von 130000 mPas (40 °C) gebildet hat.

Beispiel 8: Eine Mischung aus 150 g Präpolymer gemäss Beispiel 3 und 150 g Bisphenol-A Diglycidylether (Epoxidgehalt 5,4 Val/kg) wird in Gegenwart von 4,5 g Triphenylphosphin 2 Stunden lang auf 140 °C erhitzt, bis sich ein viskoses Harz mit den folgenden Analysedaten gebildet hat: Epoxidgehalt: 1,8 Val/kg; Viskosität (25 °C): 44800 mPas.

Beispiel 9: Eine Mischung aus 500 g des bis-4-hydroxybenzoat-terminierten Polytetrahydrofurans aus Beispiel 3, 214 g Dimethylformamid, 170 g feingemahlenes Kaliumcarbonat und 275 g Epichlorhydrin wird 5 Stunden lang auf 60 °C erhitzt. Dann filtriert man das Salz ab, engt am Rotationsverdampfer bei 80 °C am Vakuum ein, versetzt mit 1,5 l Diethylether und wäscht mit 500 ml deionisiertem Wasser. Nachdem die Etherphase über Natriumsulfat getrocknet wurde, zieht man das Lösungsmittel im Vakuum ab. Man erhält 470 g eines viskosen Harzes mit den folgenden Analysedaten: Viskosität (nach Epprecht): $\eta_{25}$ = 4320 mPas;
Epoxidgehalt: 0,95 Aequ./kg;
Molekulargewicht (GPC, in THF): $M_n$ = 1480; $M_w/M_n$ = 3,6.

Beispiel 10: Zu einer Mischung aus 500 g des bis-4-hydroxybenzoatterminierten Polytetrahydrofurans aus Beispiel 3 und 66 g Bromcyan in 1 l Toluol gibt man bei 0 °C innerhalb von 30 Minuten 93,2 g Triethylamin in 500 ml Toluol und rührt weitere 3 Stunden lang bei 0 °C. Dann filtriert man und wäscht die organische Phase mit 750 ml Wasser. Nach dem Trocknen über Natriumsulfat entfernt man das Lösungsmittel im Vakuum am Rotationsverdampfer bei 60-70 °C. Es werden 440 g eines viskosen Harzes mit den folgenden Analysedaten erhalten:
Viskosität (nach Epprecht): $\eta_{25}$ = 8960 mPas.
Molekulargewicht (GPC, in THF): $M_n$ = 1210; $M_w/M_n$ = 9,7.

Beispiel 11: Eine Mischung aus 1 kg bis-hydroxylterminiertem Polytetrahydrofuran ($M_n$ = 1000) und 330 g p-Aminobenzoesäureethylester wird in Gegenwart von 4 g Dibutylzinnoxid 8 Stunden lang auf 220 °C erhitzt, wobei Ethanol abdestilliert. Es werden 1250 g eines viskosen Harzes mit den folgenden Analysedaten isoliert:
Viskosität (nach Epprecht): $\eta_{25}$ = 6080 mPas;
Amingehalt: 1,4 Aequ./kg.
Molekulargewicht (GPC, in THF): $M_n$ = 1500; $M_w/M_n$ = 3,6.

B) Anwendungsbeispiele

Untersuchung der gehärteten Mischungen

Auf einem Dreiwalzenstuhl werden die in der folgenden Tabelle beschriebenen Mischungen hergestellt und zur Verklebung von entfettetem, sandgestrahlten 1,5 mm dickem Aluminium (Avional®) eingesetzt. Dabei werden die Prüfkörper mit einer Ueberlappung von 1,25 $cm^2$ 60 Minuten auf 180 °C erhitzt, um die oben beschriebenen Mischungen zu härten. Die Zugscherfestigkeit ($N/mm^2$) wird nach DIN 53283 bestimmt. Ferner wird in einigen Fällen die Winkelschälfestigkeit ("T-peel") auf 0,8 mm entfettetem Stahl gemäss DIN 53282 bestimmt, wobei eine Stunde bei 180 °C gehärtet wird. Die Resultate findet man in der folgenden Tabelle:

Tabelle: Zusammensetzung und Testergebnisse der untersuchten Klebstoffmischungen

| Beispiel Nr. | I | II | III | IV | V | VI | VII | VIII | IX | X | XI | XII | XIII | XIV |
|---|---|---|---|---|---|---|---|---|---|---|---|---|---|---|
| Diglycidylether auf Bisphenol A Basis (Epoxidgehalt 5,4 Val/kg) | 35 | 35 | 35 | 35 | 35 | 35 | 35 | 35 | 35 | 35 | - | 35 | 35 | 35 |
| Butandioldiglycidylether (Epoxidgehalt 9,2 Val/kg) | 2,5 | 2,5 | 2,5 | 2,5 | 2,5 | 2,5 | 2,5 | 10 | 10 | 10 | - | 2,5 | 2,5 | 2,5 |
| Wollastonit Pl | 15 | 15 | 15 | 15 | 15 | 15 | 15 | 15 | - | - | - | 15 | 15 | 15 |
| Pyrogene Kieselsäure | 3,5 | 3,5 | 3,5 | 3,5 | 3,5 | 3,5 | 3,5 | 3,5 | 2 | 2 | 2 | 3,5 | 3,5 | 3,5 |
| Dicyandiamid | 4,9 | 4,9 | 4,9 | 4,9 | 4,9 | 4,9 | 4,9 | 4,9 | 4,8 | 4,8 | 4,8 | 4,9 | 4,9 | 4,9 |
| Chlortoluron | 0,25 | 0,25 | 0,25 | 0,25 | 0,25 | 0,25 | 0,25 | 0,25 | 1,0 | 1,0 | 1,0 | 0,25 | 0,25 | 0,25 |
| Präpolymer aus Beispiel 7 | 15 | 15 | 15 | 15 | 15 | 15 | 30 | 7,5 | 15 | 30 | 30 | 15 | 15 | 15 |
| Präpolymer aus Beispiel Nr. | 1 | 2 | 3 | 4 | 5 | 6 | 8 | 3 | 3 | 3 | 3 | 9 | 10 | 11 |
| (g) | 15 | 15 | 15 | 15 | 15 | 15 | 15 | 7,5 | 15 | 30 | 30 | 15 | 15 | 15 |
| Zugscherfestigkeit auf Aluminium ($N/mm^2$) | 39,0 | 35,0 | 33,7 | 33,7 | 35,0 | 26,7 | 38,7 | 35,4 | 32,4 | 25,5 | 6,3 | 34,8 | 33,0 | 28,9 |
| Zugscherfestigkeit auf Stahl ($N/mm^2$) | 29,9 | 28,3 | 25,1 | 27,4 | 27,8 | 20,3 | 27,9 | n.b. | n.b. | n.b. | n.b. | 26,2 | 28,0 | 27,3 |
| Winkelschälfestigkeit auf Stahl (N/mm) | 3,1 | 4,0 | 5,4 | 5,9 | 4,7 | 3,0 | 4,0 | n.b. | n.b. | n.b. | n.b. | 3,7 | 5,2 | 4,5 |

n.b. ≙ nicht bestimmt

**Patentansprüche**
**Patentansprüche für folgende Vertragsstaaten : CH, DE, FR, GB, IT, LI, NL, SE**

1. Zusammensetzungen enthaltend
A) ein flüssiges, bei Temperaturen unterhalb von 80 °C fliessfähiges Copolymeres auf Basis von Butadien und mindestens einem polaren, ethylenisch ungesättigten Comonomeren und
B) eine Verbindung mit einem Molekulargewicht (Zahlenmittel) von 600 bis 20000 der Formel I

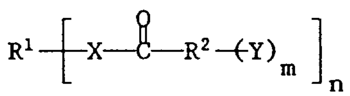 (I),

worin m 1 oder 2 ist, n 2 bis 6 bedeutet, X -O-, -S- oder $-NR^3-$ ist, Y ein Rest ist, der ausgewählt wird aus der Gruppe bestehend aus -OH, $-NHR^3$, -OCN,

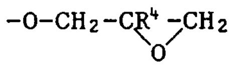 oder 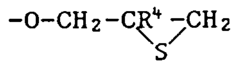,

$R^1$ ein hydroxyl-, mercapto- oder amino-terminierter Rest eines Polyalkylenglykols nach dem Entfernen der funktionellen Gruppen ist,
$R^2$ ein carbocyclisch-aromatischeer oder araliphatischer m + 1-wertiger Rest ist, mit direkt an den aromatischen Kern gebundenen Gruppen Y,
$R^3$ Wasserstoff, $C_1$-$C_6$ Alkyl oder Phenyl bedeutet und $R^4$ Methyl oder insbesondere Wasserstoff ist,
wobei das Gewichtsverhältnis von A) zu B) im Bereich von 50:1 bis 1:50 liegt.

2. Zusammensetzungen gemäss Anspruch 1, worin Komponente A) ein flüssiges Butadien-Acrylnitril-Copolymeres ist oder worin Komponente A) ein Addukt eines Butadien-Acrylnitril-Copolymeren mit gegenüber Epoxidharzen reaktiven funktionellen Gruppen an ein Epoxidharz ist.

3. Zusammensetzung gemäss Anspruch 1, worin $R^1$ ein hydroxyl-, mercapto- oder amino-terminierter Rest eines Polypropylenglykols oder eines Polybutylenglykols nach dem Entfernen der funktionellen Gruppen ist.

4. Zusammensetzungen gemäss Anspruch 1, worin n 2 oder 3 ist und m 1 bedeutet.

5. Zusammensetzungen gemäss Anspruch 1, worin X -O-, -S- oder -NH-ist.

6. Zusammensetzungen gemäss Anspruch 1, worin Y $-NH_2$ und insbesondere -OH, -OCN,

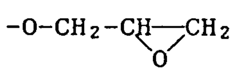 oder 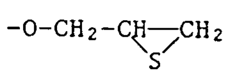

ist.

7. Zusammensetzungen gemäss Anspruch 1, worin $R^2$ ein Rest der Formeln IVa, IVb oder IVc ist

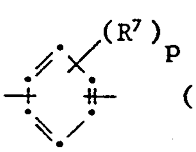 (IVa), 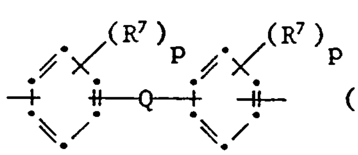 (IVb), 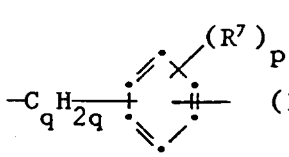 (IVc),

worin $R^7$ $C_1$-$C_6$ Alkyl, $C_2$-$C_6$ Alkenyl, $C_2$-$C_6$ Alkinyl, $C_1$-$C_6$ Alkoxy, Halogen, insbesondere Chlor oder Brom, und Phenyl bedeutet, p eine ganze Zahl von 0 bis 3, insbesondere 0 oder 1, ist q 1, 2 oder 3 ist,

insbesondere 1 oder 2, und Q eine direkte Bindung, $-C_qH_{2q}-$, insbesondere $-CH_2-$ oder $-C(CH_3)_2-$ ist, oder -O-, -S-, $-SO_2-$, -CO- oder $-C(CF_3)_2-$ bedeutet.

**8.** Zusammensetzungen gemäss Anspruch 1, worin m 1 bedeutet, n 2 oder 3 ist, $R^1$ ein Rest eines hydroxyl-, mercapto- oder amino-terminierten Polyalkylenglykols nach dem Entfernen der funktionellen Gruppen ist, und $R^2$ ein Rest der Formeln IVd, IVe, IVf oder IVg ist

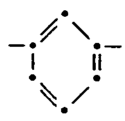 (IVd), 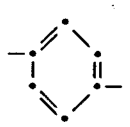 (IVe), 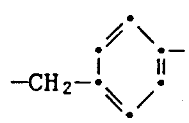 (IVf), 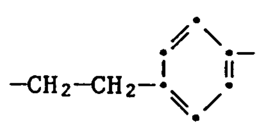 (IVg).

**9.** Verbindungen der Formel I gemäss Anspruch 1, worin Y -OCN oder

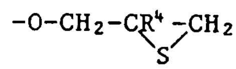

ist und $R^4$ die in Anspruch 1 definierte Bedeutung besitzt.

**10.** Zusammensetzungen enthaltend Komponenten A) und B) gemäss Anspruch 1 und C) ein Epoxidharz mit wenigstens zwei 1,2-Epoxidgruppen pro Molekül; oder enthaltend ein Addukt aus Komponente A) und einem Epoxidharz, sowie Komponente B) und gegebenenfalls Komponente C); oder enthaltend Komponente A), ein Addukt aus Komponente B) und einem Epoxidharz und gegebenenfalls Komponente C); oder enthaltend ein Addukt aus Komponente A) und einem Epoxidharz, ein Addukt aus Komponente B) und einem Epoxidharz sowie gegebenenfalls Komponente C).

**11.** Zusammensetzungen gemäss Anspruch 10 enthaltend Komponente A) und ein Addukt aus einem Epoxidharz C) an eine Verbindung der Formel I gemäss Anspruch 1, worin Y -OH ist.

**12.** Zusammensetzungen gemäss Anspruch 10 enthaltend zusätzlich zu den Komponenten A), B) und C) oder enthaltend zusätzlich zu den Addukten von Komponente A) und/oder Komponente B) mit Komponente C) eine wirksame Menge eines Härters auf Basis eines aromatischen primären und/oder sekundären aromatischen Amins oder eines Amidins, insbesondere Dicyandiamid, gegebenenfalls in Kombination mit einem Beschleuniger, insbesondere einem Beschleuniger auf Harnstoffbasis.

**13.** Verfahren zur Herstellung gehärteter Produkte, dadurch gekennzeichnet, dass man Zusammensetzungen gemäss Anspruch 10 mit Härtern für Epoxidharze kombiniert und diese Mischung gegebenenfalls durch Erhitzen aushärtet.

**14.** Verfahren gemäss Anspruch 13, dadurch gekennzeichnet, dass man eine Zusammensetzung gemäss Anspruch 12 durch Erhitzen härtet.

**15.** Verwendung der Zusammensetzungen gemäss Anspruch 1 als Flexibilisatoren für Epoxidharze.

**16.** Verwendung der Zusammensetzungen gemäss Anspruch 10 zur Herstellung von Klebstoffen, Klebefilmen, Patches, Dichtungsmassen, Lacken oder Matrixharzen.

**Patentansprüche für folgenden Vertragsstaat : ES**

**1.** Zusammensetzungen enthaltend
A) ein flüssiges, bei Temperaturen unterhalb von 80 °C fliessfähiges Copolymeres auf Basis von Butadien und mindestens einem polaren, ethylenisch ungesättigten Comonomeren und

B) eine Verbindung mit einem Molekulargewicht (Zahlenmittel) von 600 bis 20000 der Formel I

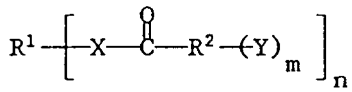 (I),

worin m 1 oder 2 ist, n 2 bis 6 bedeutet, X -O-, -S- oder -NR$^3$- ist, Y ein Rest ist, der ausgewählt wird aus der Gruppe bestehend aus -OH, -NHR$^3$, -OCN,

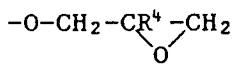 oder 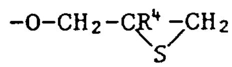,

$R^1$ ein hydroxyl-, mercapto- oder amino-terminierter Rest eines Polyalkylenglykols nach dem Entfernen der funktionellen Gruppen ist,
$R^2$ ein carbocyclisch-aromatischeer oder araliphatischer m + 1-wertiger Rest ist, mit direkt an den aromatischen Kern gebundenen Gruppen Y,
$R^3$ Wasserstoff, $C_1$-$C_6$ Alkyl oder Phenyl bedeutet und $R^4$ Methyl oder insbesondere Wasserstoff ist,
wobei das Gewichtsverhältnis von A) zu B) im Bereich von 50:1 bis 1:50 liegt.

**2.** Zusammensetzungen gemäss Anspruch 1, worin Komponente A) ein flüssiges Butadien-Acrylnitril-Copolymeres ist oder worin Komponente A) ein Addukt eines Butadien-Acrylnitril-Copolymeren mit gegenüber Epoxidharzen reaktiven funktionellen Gruppen an ein Epoxidharz ist.

**3.** Zusammensetzung gemäss Anspruch 1, worin $R^1$ ein hydroxyl-, mercapto- oder amino-terminierter Rest eines Polypropylenglykols oder eines Polybutylenglykols nach dem Entfernen der funktionellen Gruppen ist.

**4.** Zusammensetzungen gemäss Anspruch 1, worin n 2 oder 3 ist und m 1 bedeutet.

**5.** Zusammensetzungen gemäss Anspruch 1, worin X -O-, -S- oder -NH-ist.

**6.** Zusammensetzungen gemäss Anspruch 1, worin Y -$NH_2$ und insbesondere -OH, -OCN,

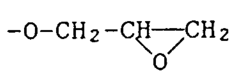 oder 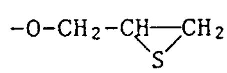

ist.

**7.** Zusammensetzungen gemäss Anspruch 1, worin $R^2$ ein Rest der Formeln IVa, IVb oder IVc ist

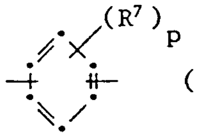 (IVa), 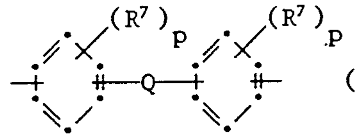 (IVb), 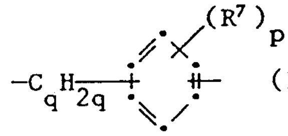 (IVc),

worin $R^7$ $C_1$-$C_6$ Alkyl, $C_2$-$C_6$ Alkenyl, $C_2$-$C_6$ Alkinyl, $C_1$-$C_6$ Alkoxy, Halogen, insbesondere Chlor oder Brom, und Phenyl bedeutet, p eine ganze Zahl von 0 bis 3, insbesondere 0 oder 1, ist q 1, 2 oder 3 ist, insbesondere 1 oder 2, und Q eine direkte Bindung, -$C_qH_{2q}$-, insbesondere -$CH_2$- oder -$C(CH_3)_2$- ist, oder -O-, -S-, -$SO_2$-, -CO- oder -$C(CF_3)_2$- bedeutet.

**8.** Zusammensetzungen gemäss Anspruch 1, worin m 1 bedeutet, n 2 oder 3 ist, $R^1$ ein Rest eines hydroxyl-, mercapto- oder amino-terminierten Polyalkylenglykols nach dem Entfernen der funktionellen

Gruppen ist, und $R^2$ ein Rest der Formeln IVd, IVe, IVf oder IVg ist

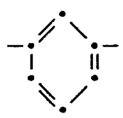 (IVd), 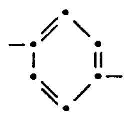 (IVe), 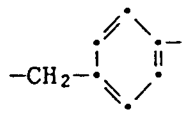 (IVf), 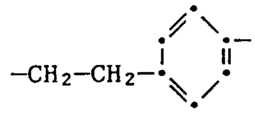 (IVg).

**9.** Verfahren zur Herstellung von Verbindungen der Formel I gemäss Anspruch 1, worin Y -OCN ist, dadurch gekennzeichnet, dass man im wesentlichen äquivalente Mengen von Verbindungen der Formel Ia und Halogencyan unter Kühlung und unter Zugabe eines tertiären Amins miteinander umsetzt

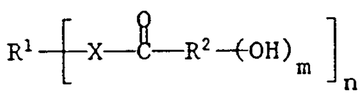 (Ia),

worin $R^1$, $R^2$, X, m und n die in Anspruch 1 definierte Bedeutung besitzen.

**10.** Verfahren zur Herstellung von Verbindungen der Formel I gemäss Anspruch 1, worin Y

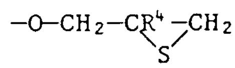

ist, dadurch gekennzeichnet, dass man Verbindungen der Formel I, worin Y

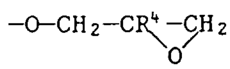

ist mit Kaliumrhodanid oder mit Thioharnstoff umsetzt.

**11.** Zusammensetzungen enthaltend Komponenten A) und B) gemäss Anspruch 1 und C) ein Epoxidharz mit wenigstens zwei 1,2-Epoxidgruppen pro Molekül; oder enthaltend ein Addukt aus Komponente A) und einem Epoxidharz, sowie Komponente B) und gegebenenfalls Komponente C); oder enthaltend Komponente A), ein Addukt aus Komponente B) und einem Epoxidharz und gegebenenfalls Komponente C); oder enthaltend ein Addukt aus Komponente A) und einem Epoxidharz, ein Addukt aus Komponente B) und einem Epoxidharz sowie gegebenenfalls Komponente C).

**12.** Zusammensetzungen gemäss Anspruch 11 enthaltend Komponente A) und ein Addukt aus einem Epoxidharz C) an eine Verbindung der Formel I gemäss Anspruch 1, worin Y -OH ist.

**13.** Zusammensetzungen gemäss Anspruch 11 enthaltend zusätzlich zu den Komponenten A), B) und C) oder enthaltend zusätzlich zu den Addukten von Komponente A) und/oder Komponente B) mit Komponente C) eine wirksame Menge eines Härters auf Basis eines aromatischen primären und/oder sekundären aromatischen Amins oder eines Amidins, insbesondere Dicyandiamid, gegebenenfalls in Kombination mit einem Beschleuniger, insbesondere einem Beschleuniger auf Harnstoffbasis.

**14.** Verfahren zur Herstellung gehärteter Produkte, dadurch gekennzeichnet, dass man Zusammensetzungen gemäss Anspruch 11 mit Härtern für Epoxidharze kombiniert und diese Mischung gegebenenfalls durch Erhitzen aushärtet.

**15.** Verfahren gemäss Anspruch 14, dadurch gekennzeichnet, dass man eine Zusammensetzung gemäss Anspruch 13 durch Erhitzen härtet.

**16.** Verwendung der Zusammensetzungen gemäss Anspruch 1 als Flexibilisatoren für Epoxidharze.

**17.** Verwendung der Zusammensetzungen gemäss Anspruch 11 zur Herstellung von Klebstoffen, Klebefilmen, Patches, Dichtungsmassen, Lacken oder Matrixharzen.

**Claims**

**Claims for the following Contracting States : CH, DE, FR, GB, IT, LI, NL, SE**

**1.** A composition comprising

A) a liquid copolymer which is flowable at temperatures below 80 °C and is based on butadiene and at least one polar, ethylenically unsaturated comonomer, and

B) a compound having a (number-average) molecular weight of from 600 to 20,000, of the formula I

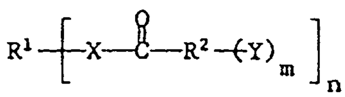 (I),

wherein m is 1 or 2, n is 2 to 6, X is -O-, -S- or $-NR^3-$, Y is a radical selected from the group consisting of -OH, $-NHR^3$, -OCN,

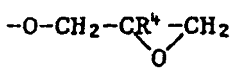 and 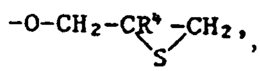 ,

$R^1$ is a hydroxyl-, mercapto- or amino-terminated radical of a polyalkylene glycol after removal of the functional groups, $R^2$ is a carbocyclic aromatic or araliphatic radical of valency m + 1 with groups Y bonded direct to the aromatic ring, $R^3$ is hydrogen, $C_1$-$C_6$alkyl or phenyl and $R^4$ is methyl or, in particular, hydrogen, the ratio by weight of A) to B) being within the range from 50:1 to 1:50.

**2.** A composition according to claim 1, in which component A) is a liquid butadiene/acrylonitrile copolymer or wherein component A) is an adduct of a butadiene/acrylonitrile copolymer, containing functional groups which are reactive towards epoxy resins, with an epoxy resin.

**3.** A composition according to claim 1, in which $R^1$ is a hydroxyl-, mercapto- or amino-terminated radical of a polypropylene glycol or of a polybutylene glycol after the removal of the functional groups.

**4.** A composition according to claim 1, in which n is 2 or 3 and m is 1.

**5.** A composition according to claim 1, in which X is -O-, -S- or -NH-.

**6.** A composition according to claim 1, in which Y is $-NH_2$ and especially -OH, -OCN,

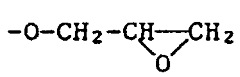 or 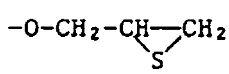 .

**7.** A composition according to claim 1, in which $R^2$ is a radical of the formula IVa, IVb or IVc

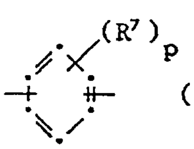 (IVa), 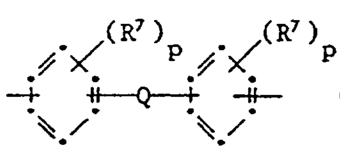 (IVb), 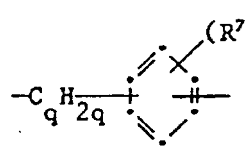 (IVc),

wherein $R^7$ is $C_1$-$C_6$alkyl, $C_2$-$C_6$alkenyl, $C_2$-$C_6$alkynyl, $C_1$-$C_6$alkoxy, halogen, especially chlorine or bromine, or phenyl, p is an integer from 0 to 3, especially 0 or 1, q is 1, 2 or 3, especially 1 or 2, and Q is a direct bond, $-C_qH_{2q}-$, especially $-CH_2-$ or $-C(CH_3)_2-$, or -O-, -S-, $-SO_2-$, -CO- or $-C(CF_3)_2-$.

8. A composition according to claim 1, in which m is 1, n is 2 or 3, $R^1$ is a radical of a hydroxyl-, mercapto- or amino-terminated polyalkylene glycol, after removal of the functional groups, and $R^2$ is a radical of the formula IVd, IVe, IVf or IVg

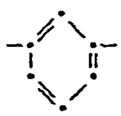 (IVd), 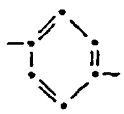 (IVe), 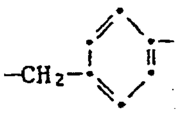 (IVf), 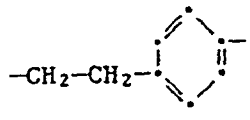 (IVg).

9. A compound of the formula I according to claim 1, in which Y is -OCN or

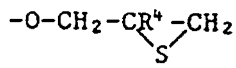

and $R^4$ is as defined in claim 1.

10. A composition comprising components A) and B) according to claim 1 and C) an epoxy resin with at least two 1,2-epoxy groups per molecule, or comprising an adduct of component A) and an epoxy resin, component B) and optionally component C), or comprising component A), an adduct of component B) and an epoxy resin, and optionally component C), or comprising an adduct of component A) and an epoxy resin, an adduct of component B) and an epoxy resin, and optionally component C).

11. A composition according to claim 10 comprising component A) and an adduct of an epoxy resin C) and a compound of formula I according to claim 1 in which Y is -OH.

12. A composition according to claim 10 comprising, in addition to components A), B) and C) or in addition to the adducts of component A) and/or component B) with component C), an effective amount of a hardener based on a primary aromatic and/or a secondary aromatic amine or on an amidine, especially dicyandiamide, optionally in combination with an accelerator, especially an urea-based accelerator.

13. A process for producing cured products, which comprises combining a composition according to claim 10 with a hardener for epoxy resins and optionally curing this mixture by heating.

14. A process according to claim 13, which comprises curing a composition according to claim 12 by heating.

15. Use of a composition according to claim 1 as a flexibilizer for epoxy resins.

16. Use of a composition according to claim 10 for producing adhesives, adhesive films, patches, sealing compounds, surface coatings or matrix resins.

**Claims for the following Contracting State : ES**

1. A composition comprising
   A) a liquid copolymer which is flowable at temperatures below 80 °C and is based on butadiene and at least one polar, ethylenically unsaturated comonomer, and
   B) a compound having a (number-average) molecular weight of from 600 to 20,000, of the formula I

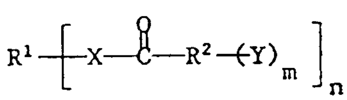 (I),

wherein m is 1 or 2, n is 2 to 6, X is -O-, -S- or $-NR^3-$, Y is a radical selected from the group consisting of -OH, $-NHR^3$, -OCN,

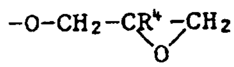 and 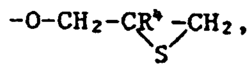,

$R^1$ is a hydroxyl-, mercapto- or amino-terminated radical of a polyalkylene glycol after removal of the functional groups, $R^2$ is a carbocyclic aromatic or araliphatic radical of valency m + 1 with groups Y bonded direct to the aromatic ring, $R^3$ is hydrogen, $C_1$-$C_6$alkyl or phenyl and $R^4$ is methyl or, in particular, hydrogen, the ratio by weight of A) to B) being within the range from 50:1 to 1:50.

**2.** A composition according to claim 1, in which component A) is a liquid butadiene/acrylonitrile copolymer or wherein component A) is an adduct of a butadiene/acrylonitrile copolymer, containing functional groups which are reactive towards epoxy resins, with an epoxy resin.

**3.** A composition according to claim 1, in which $R^1$ is a hydroxyl-, mercapto- or amino-terminated radical of a polypropylene glycol or of a polybutylene glycol after the removal of the functional groups.

**4.** A composition according to claim 1, in which n is 2 or 3 and m is 1.

**5.** A composition according to claim 1, in which X is -O-, -S- or -NH-.

**6.** A composition according to claim 1, in which Y is $-NH_2$ and especially -OH, -OCN,

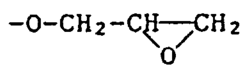 or 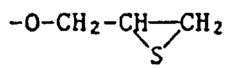 .

**7.** A composition according to claim 1, in which $R^2$ is a radical of the formula IVa, IVb or IVc

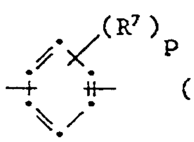 (IVa), 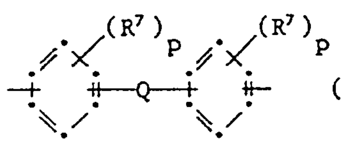 (IVb), 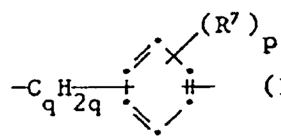 (IVc),

wherein $R^7$ is $C_1$-$C_6$alkyl, $C_2$-$C_6$alkenyl, $C_2$-$C_6$alkynyl, $C_1$-$C_6$alkoxy, halogen, especially chlorine or bromine, or phenyl, p is an integer from 0 to 3, especially 0 or 1, q is 1, 2 or 3, especially 1 or 2, and Q is a direct bond, $-C_qH_{2q}-$, especially $-CH_2-$ or $-C(CH_3)_2-$, or -O-, -S-, $-SO_2-$, -CO- or $-C(CF_3)_2-$.

**8.** A composition according to claim 1, in which m is 1, n is 2 or 3, $R^1$ is a radical of a hydroxyl-, mercapto- or amino-terminated polyalkylene glycol, after removal of the functional groups, and $R^2$ is a radical of the formula IVd, IVe, IVf or IVg

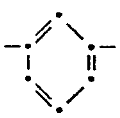 (IVd), 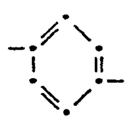 (IVe), 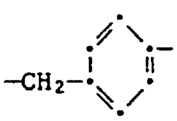 (IVf), 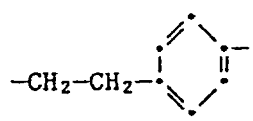 (IVg).

**9.** A process for preparing a compound of formula I according to claim 1 in which Y is -OCN, which comprises reacting essentially equivalent amounts of a compound of formula Ia and a cyanogen halide with one another, while cooling, and with addition of a tertiary amine;

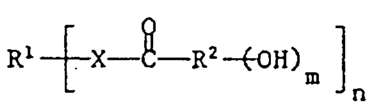 (Ia),

wherein $R^1$, $R^2$, X, m and n are as defined in claim 1.

**10.** A process for preparing a compound of formula I according to claim 1 in which Y is

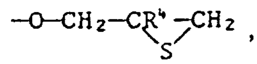

which comprises reacting a compound of formula I in which Y is

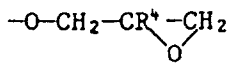

with potassium thiocyanate or with thiourea.

**11.** A composition comprising components A) and B) according to claim 1 and C) an epoxy resin with at least two 1,2-epoxy groups per molecule, or comprising an adduct of component A) and an epoxy resin, component B) and optionally component C), or comprising component A), an adduct of component B) and an epoxy resin, and optionally component C), or comprising an adduct of component A) and an epoxy resin, an adduct of component B) and an epoxy resin, and optionally component C).

**12.** A composition according to claim 11 comprising component A) and an adduct of an epoxy resin C) and a compound of formula I according to claim 1 in which Y is -OH.

**13.** A composition according to claim 11 comprising, in addition to components A), B) and C) or in addition to the adducts of component A) and/or component B) with component C), an effective amount of a hardener based on a primary aromatic and/or a secondary aromatic amine or on an amidine, especially dicyandiamide, optionally in combination with an accelerator, especially an urea-based accelerator.

**14.** A process for producing cured products, which comprises combining a composition according to claim 11 with a hardener for epoxy resins and optionally curing this mixture by heating.

**15.** A process according to claim 14, which comprises curing a composition according to claim 13 by heating.

**16.** Use of a composition according to claim 1 as a flexibilizer for epoxy resins.

**17.** Use of a composition according to claim 11 for producing adhesives, adhesive films, patches, sealing compounds, surface coatings or matrix resins.

**Revendications**
**Revendications pour les Etats contractants suivants : CH, DE, FR, GB, IT, LI, NL, SE**

**1.** Compositions contenant
A) un copolymère liquide à base de butadiène, coulable à des températures inférieures à 80 °C, et au moins un comonomère à insaturation éthylénique, polaire, et
B) un composé d'un poids moléculaire (moyenne en nombre) de 600 à 20 000 de formule I

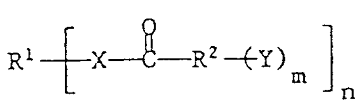 (I)

dans laquelle m vaut 1 ou 2, n va de 2 à 6, X est -O-, -S- ou -$NR^3$-, Y est un radical choisi dans un groupe comprenant -OH, -$NHR^3$, -OCN,

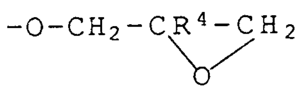 ou 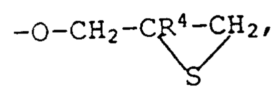

$R^1$ est un radical d'un polyalkylène glycol à groupes terminaux hydroxyle, mercapto ou amino après l'élimination des groupes fonctionnels,
$R^2$ est un radical carbocyclique aromatique ou araliphatique avec m + 1 fonctions, avec des groupes Y liés directement au noyau aromatique,
$R^3$ représente hydrogène, alkyle en $C_1$-$C_6$ ou phényle, et $R^4$ représente méthyle et plus particulièrement l'hydrogène, le rapport pondéral de A) à B) étant dans compris le domaine entre 50:1 et 1:50.

**2.** Compositions selon la revendication 1, dans lesquelles le composant A) est un copolymère liquide du butadiène-acrylonitrile ou dans lesquelles le composant A) est un produit d'addition d'un copolymère du butadiène-acrylonitrile, ayant des groupes fonctionnels réactifs vis-à-vis des résines époxydes, sur une résine époxyde.

**3.** Compositions selon la revendication 1, où $R^1$ est un radical d'un polypropylène-glycol ou d'un polybutylène-glycol comportant des groupes terminaux hydroxyle, mercapto ou amino après l'élimination des groupes fonctionnels.

**4.** Compositions selon la revendication 1, où n vaut 2 ou 3 et m vaut 1.

**5.** Compositions selon la revendication 1, où X représente -O-, -S- ou -NH-.

**6.** Compositions selon la revendication 1, où Y représente $-NH_2$ et plus particulièrement -OH, -OCN,

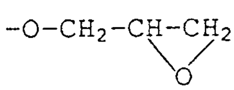 ou 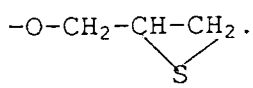.

**7.** Compositions selon la revendication 1, où $R^2$ représente un radical de formules IVa, IVb ou IVc :

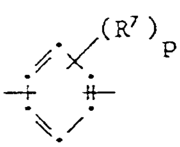 (IVa), 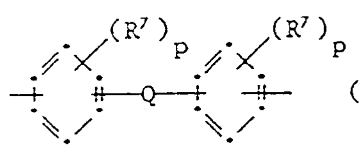 (IVb), 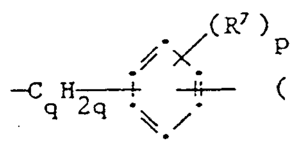 (IVc),

où $R^7$ représente alkyle en $C_1$-$C_6$, alcényle en $C_2$-$C_6$, alcynyle en $C_2$-$C_6$, alcoxy en $C_1$-$C_6$, halogène, plus particulièrement chlore ou brome, et phényle, p est un nombre entier de 0 à 3, plus particulièrement 0 ou 1, si q vaut 1, 2 ou 3, plus particulièrement 1 ou 2, et Q représente une liaison directe, $-C_qH_{2q}-$, notamment $-CH_2-$ou $-C(CH_3)_2-$, ou -O-, -S-, $-SO_2$, -CO- ou $-C(CF_3)_2-$.

**8.** Compositions selon la revendication 1, où m vaut 1, n vaut 2 ou 3, $R^1$ est un radical d'un polyalkylèneglycol comportant des groupes terminaux hydroxyle, mercapto ou amino après l'élimination des groupes fonctionnels, et $R^2$ représente un radical de formules IVd, IVe, IVf ou IVg :

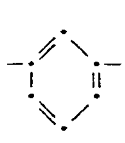 (IVd), 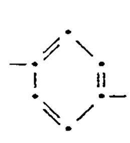 (IVe), 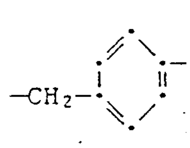 (IVf), 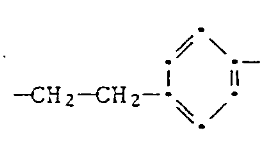 (IVg).

**9.** Composés de formule I selon la revendication I, où Y est -OCN ou

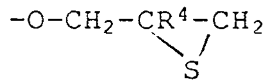

et $R^4$ a la signification définie dans la revendication 1.

**10.** Compositions contenant les composants A) et B) selon la revendication 1, et C) une résine époxyde avec au moins deux groupes 1,2-époxyde par molécule ; ou contenant un produit d'addition du composant A) et d'une résine époxyde ainsi que du composant B) et éventuellement du composant C) ; ou contenant le composant A), un produit d'addition du composant B) et d'une résine époxyde et éventuellement du composant C) ; ou contenant un produit d'addition du composant A) et d'une résine époxyde, un produit d'addition du composant B) et d'une résine époxyde, ainsi qu'éventuellement du composant C).

**11.** Compositions selon la revendication 10, contenant le composant A) et un produit d'addition d'une résine époxyde C) sur un composé de formule I selon la revendication 1, où Y représente -OH.

**12.** Compositions selon la revendication 10 contenant outre les composants A), B) et C), ou contenant outre les produits d'addition du composant A) et/ou du composant B) avec le composant C), une quantité efficace d'un agent de durcissement à base d'une amine aromatique primaire et/ou d'une amine aromatique secondaire, ou d'une amidine, plus particulièrement du dicyanodiamide, éventuellement en combinaison avec un accélérateur, plus particulièrement avec un accélérateur à base d'urée.

**13.** Procédé pour la préparation de produits durcis caractérisé en ce qu'on combine les compositions selon la revendication 10, avec des agents de durcissement pour des résines époxydes et on durcit ce mélange éventuellement par chauffage.

**14.** Procédé selon la revendication 13, caractérisé en ce qu'on durcit une composition selon la revendication 12, par chauffage.

**15.** Utilisation des compositions selon la revendication 1, en tant qu'agents de flexibilisation pour des résines époxydes.

**16.** Utilisation des compositions selon la revendication 10, pour la préparation d'adhésifs, de films adhésifs, de patches, de masques d'étanchéification, de vernis ou de résines pour matrices.

**Revendications pour l'Etat contractant suivant : ES**

**1.** Compositions contenant

A) un copolymère liquide à base de butadiène, coulable à des températures inférieures à 80 °C, et au moins un comonomère à insaturation éthylénique, polaire, et

B) un composé d'un poids moléculaire (moyenne en nombre) de 600 à 20 000 de formule I

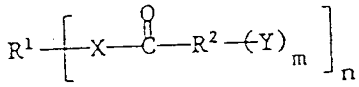

(I)

dans laquelle m vaut 1 ou 2, n va de 2 à 6, X est -O-, -S- ou -$NR^3$-, Y est un radical choisi dans un groupe comprenant -OH, -$NHR^3$, -OCN,

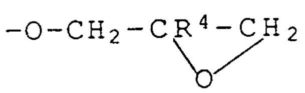 ou 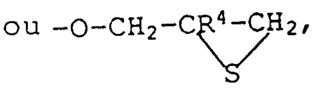

$R^1$ est un radical d'un polyalkylène-glycol à groupes terminaux hydroxyle, mercapto ou amino après l'élimination des groupes fonctionnels,
$R^2$ est un radical carbocyclique aromatique ou araliphatique avec m + 1 fonctions, avec des groupes Y liés directement au noyau aromatique,
$R^3$ représente hydrogène, alkyle en $C_1$-$C_6$ ou phényle, et $R^4$ représente méthyle et plus particulièrement l'hydrogène, le rapport pondéral de A) à B) étant compris dans le domaine entre 50:1 et 1:50.

**2.** Compositions selon la revendication 1, dans lesquelles le composant A) est un copolymère liquide du butadiène-acrylonitrile ou dans lesquelles le composant A) est un produit d'addition d'un copolymère du butadiène-acrylonitrile, ayant des groupes fonctionnels réactifs vis-à-vis des résines époxydes, sur une résine époxyde.

**3.** Compositions selon la revendication 1, où $R^1$ est un radical d'un polypropylène-glycol ou d'un polybutylène-glycol comportant des groupes terminaux hydroxyle, mercapto ou amino après l'élimination des groupes fonctionnels.

**4.** Compositions selon la revendication 1, où n vaut 2 ou 3 et m vaut 1.

**5.** Compositions selon la revendication 1, où X représente -O-, -S- ou -NH-.

**6.** Compositions selon la revendication 1, où Y représente $-NH_2$ et plus particulièrement -OH, -OCN,

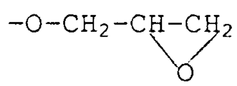 ou 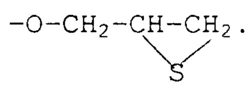.

**7.** Compositions selon la revendication 1, où $R^2$ représente un radical de formules IVa, IVb ou IVc :

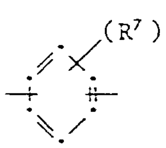 (IVa), 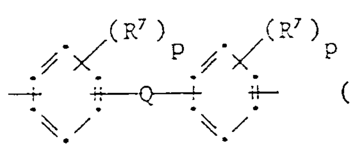 (IVb), 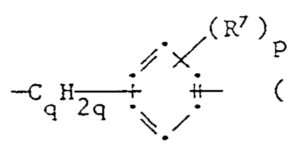 (IVc),

où $R^7$ représente alkyle en $C_1$-$C_6$, alcényle en $C_2$-$C_6$, alcynyle en $C_2$-$C_6$, alcoxy en $C_1$-$C_6$, halogène, plus particulièrement chlore ou brome, et phényle, p est un nombre entier de 0 à 3, plus particulièrement 0 ou 1, si q vaut 1, 2 ou 3, plus particulièrement 1 ou 2, et Q représente une liaison directe, $-C_qH_{2q}-$, notamment $-CH_2-$ou $-C(CH_3)_2-$, ou -O-, -S-, $-SO_2-$, -CO- ou $-C(CF_3)_2-$.

**8.** Compositions selon la revendication 1, où m vaut 1, n vaut 2 ou 3, $R^1$ est un radical d'un polyalkylèneglycol comportant des groupes terminaux hydroxyle, mercapto ou amino après l'élimination des groupes fonctionnels, et $R^2$ représente un radical de formules IVd, IVe, IVf ou IVg :

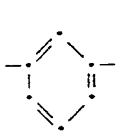 (IVd), 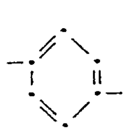 (IVe), 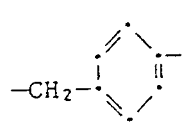 (IVf), 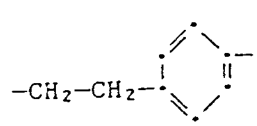 (IVg).

**9.** Procédé pour la préparation de composés de formule I selon la revendication 1, où Y est -OCN, caractérisé en ce qu'on fait réagir des quantités essentiellement équivalentes de composés de formule Ia et d'un halogénocyanure en refroidissant et en ajoutant une amine tertiaire :

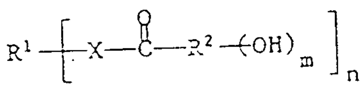

(Ia)

où $R^1$, $R^2$, X, m et n ont la signification définie dans la revendication 1.

**10.** Procédé pour la préparation de composés de formule I selon la revendication 1, où Y est

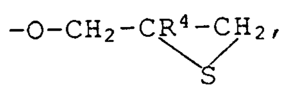

caractérisé en ce qu'on fait réagir les composés de formule I, où

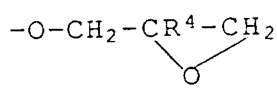

avec le rhodanide de potassium ou avec la thiourée.

**11.** Compositions contenant les composants A) et B) selon la revendication 1 et C) une résine époxyde avec au moins deux groupes 1,2-époxyde par molécule ; ou contenant un produit d'addition du composant A) et d'une résine époxyde, ainsi que du composant B) et éventuellement du composant C) ; ou contenant le composant A), un produit d'addition du composant B) et d'une résine époxyde et éventuellement du composant C) ; ou contenant un produit d'addition du composant A) et d'une résine époxyde, un produit d'addition du composant B) et d'une résine époxyde ainsi qu'éventuellement du composant C).

**12.** Compositions selon la revendication 10, contenant le composant A) et un produit d'addition d'une résine époxyde C) sur un composé de formule I selon la revendication 1 où Y représente -OH.

**13.** Compositions selon la revendication 10, contenant outre les composants A), B) et C) ou contenant outre les produits d'addition des composants A) et/ou B) avec le composant C), une quantité efficace d'un durcisseur à base d'une amine aromatique primaire et/ou d'une amine aromatique secondaire, ou d'une amidine, plus particulièrement du dicyanodiamide, éventuellement en combinaison avec un accélérateur, plus particulièrement avec un accélérateur à base d'urée.

**14.** Procédé pour la préparation de produits durcis caractérisé en ce qu'on combine les compositions selon la revendication 10 avec des agents de durcissement pour obtenir des résines époxydes et éventuellement on durcit ce mélange par chauffage.

**15.** Procédé selon la revendication 14, caractérisé en ce qu'on durcit une composition selon la revendication 13 par chauffage.

**16.** Utilisation des compositions selon la revendication 1 en tant qu'agents de flexibilisation pour des résines époxydes.

**17.** Utilisation des compositions selon la revendication 11, pour la préparation d'adhésifs, de films adhésifs, de patches, de masses d'étanchéification, de vernis ou de résines pour matrices.